# EUROPEAN PATENT SPECIFICATION

(11) **EP 2 225 445 B1**
(45) Date of publication and mention of the grant of the patent: **18.05.2011**
(21) Application number: 08858626.8
(22) Date of filing: 10.12.2008
(51) Int. Cl.: F02B 39/00, F01D 25/00, F02C 6/12, F02B 39/16, F02B 77/04

(54) **Method for cleaning turbine blades under operation conditions, corresponding turbocharger and turbine**
Verfahren zur Reinigung von Turbinenschaufeln unter Betriebsbedingungen, zugehörige Turbine und Turbolader
Procédé de nettoyage d'aubes de turbine en conditions d'exploitation, turbine et turbochargeur associés

(30) Priority: 12.12.2007 EP 07024130
(43) Date of publication of application: 08.09.2010
(73) Proprietor: Napier Turbochargers Limited, Lincoln Lincolnshire LN5 7FD (GB)
(72) Inventor: HEYES, Francis, Lincoln LN2 1RG (GB); PINKNEY, Ian, Lincoln LN3 4DN (GB)
(74) Representative: Gill, Stephen Charles
(86) International application number: PCT/EP2008/067176
(87) International publication number: WO 2009/074598

(56) References cited:
- WO-A-2005/077554
- WO-A-2007/036059
- JP-A- 58 077 103
- US-A- 5 938 402
- US-A- 5 944 483

## Description

The present invention relates to a method for cleaning turbine blades under operation conditions, a turbine and a turbocharger.

Industrial diesel engines use a variety of fuels, including heavy fuel oil. Such lower grade fuels have many impurities which lead to the formation of ash and other compounds. Some of these are transported from the diesel engine exhaust manifold to the turbocharger turbine and may form a thick hard deposit on the turbine blades. Such deposits cause a reduction in turbocharger efficiency, a reduction in flow capacity of the turbine, and an increase in the engine combustion temperatures. If this build-up is allowed to grow unchecked, the engine power capacity will reduce and damage to hot engine components may ensue. Damage can also occur to the turbocharger components.

To avoid the build-up of deposits, turbocharger turbines are fitted with a cleaning device. This can use solid particles, such as walnut shell fragments or rice, as a cleaning medium. In this case the cleaning mechanism uses the impact of the medium on the ashy deposit to dislodge the deposit. Such a "dry washing" device can be effective, but the actual cleaning medium is hard to control worldwide since, for instance, walnut shells may not be available in many countries. Moreover, the size of rice grains may determine how much rice is used and for how long. Also the cleaning medium generally causes some damage of the turbine blades themselves, so turbocharger components have to be changed regularly.

The main cleaning medium used in the industry is water. This is generally available at all staffed sites, is easy to specify and to control. The mechanism by which water cleans the hard ashy deposit is not entirely clear, however it is viewed as a combination of dissolving some of the compounds, providing an impact of water droplets to dislodge ashy particles and cracking the deposit by providing a thermal shock.

The method of use of water as a cleaning medium is well-known in the industry. For instance, in US 5,944,483 and US 5,938,402 methods and devices for cleaning of the nozzle ring of a turbocharger turbine are disclosed. In US 5,938,402 the cleaning device includes only one nozzle for injecting a cleaning agent into the exhaust gas flow. In US 5,944,483 a method is described, wherein a cleaning cycle is activated which runs automatically. In the cleaning cycle the water is briefly injected repeatedly into the region upstream of the nozzle ring and an injection pause for reheating the nozzle ring is maintained between the injection operations. The design of the used gas-inlet casing enables the water to be injected into the region directly upstream of the nozzle ring.

Typically one or a multiplicity of nozzles, usually three, are used which cause the water to form a spray. The spray nozzles are designed so that the spray forms a fan which causes a single nozzle to wash a multiplicity of turbine blades. The spray nozzles have to be placed far enough upstream of the blades so that the largest number of turbine blades is cleaned by the fewest number of nozzles. This means that the flow rate of water is kept to a minimum. The injection of large quantities of cold water into the turbocharger turbine reduces the power capacity of the turbine which in turn reduces the turbocharger boost. The turbocharger may possibly stall or the engine control system, trying to maintain a constant engine power, will increase the fuel supply and increase the engine combustion temperatures.

Since water injection nozzles are placed upstream of the blades, the droplets of water evaporate in the hot turbine gas stream and their effectiveness as a cleaning medium is reduced. It is found that water droplets have to strike the turbine blades to be effective, rather than allowing steam to reach the blades. To allow effective cleaning, the engine load is reduced while cleaning is performed. This means that the turbine inlet gas stream is cooler, which causes reduced droplet evaporation, and slower, which allows a wider spray fan than it would be at full engine load. The water flow rate and supply pressure, the position of the nozzles and the engine load during washing have to be specified to ensure an effective cleaning process. Typically an engine load of 20% is specified.

Particularly for power station applications, which are increasingly using low-grade fuel, there are strong economic arguments to avoid washing at low loads. Every minute not generating power at full load causes a reduction in revenue. This can cause pressure on the operators to wash less frequently than necessary and consequently may cause damage and an impression of unreliability of the engine and turbocharger. There is therefore an urgent need for a reliable method for cleaning turbines which is not intrusive on the operation of the engine and can be performed at high engine loads.

It is thus an objective of the present invention to provide an advantageous method for cleaning turbine blades of a turbine under operation conditions. It is a second objective to provide an improved turbine. A last objective is to provide an improved turbocharger.

The first objective is solved by a method for cleaning a number of turbine blades of a turbine under operation conditions as claimed in claim 1. The second objective is solved by a turbine as claimed in claim 10, and the third objective is solved by a turbocharger as claimed in claim 21. The depending claims define further developments of the invention.

The inventive method for cleaning a number of turbine blades of a turbine under operation conditions by means of a cleaning fluid which is sprayed onto the turbine blades by a number of nozzles is characterised in that the cleaning fluid is distributed to the nozzles such that only a fraction of the nozzles is used at any one time to spray the cleaning fluid onto the turbine blades. The turbine blades to be cleaned are preferably turbine stator blades since the flow passage between stator blades may be constricted by ashy deposit, if the deposit is not removed. However, turbine rotor blades, on which ashy may also be present but to a lesser degree than on the turbine stator blades, can be cleaned, as well.

Preferably the cleaning fluid is distributed to the nozzles such that only one nozzle is used at any one time. By washing with only a fraction of the nozzles or only one nozzle at a time, the water flow rate is kept to a minimum and the thermodynamic effect on the engine during washing is also minimised. This offers the possibility to install a washing cycle in which different sections of the turbine blades or turbine blades of different sections of the turbine are washed sequentially. Hence, the respective actual thermodynamic load to the turbine due to the cleaning process at any time is reduced to the fraction which corresponds to the fraction of the actual cleaned blades to the total number of blades or to the fraction of the actually cleaned surface of a blade to the total surface of the blade. With the reduced load it becomes possible to clean while the turbine is running at full load. Since the cleaning can be done at full load a possible lengthening of the duration for fully cleaning all turbine blades is of no severe consequence.

The cleaning fluid can, for example, be distributed by means of a distributor valve. The distributor valve can be driven by compressed air.

The cleaning fluid can advantageously be led for a specified time to each of the nozzles in turn. Each of the nozzles can be connected to a water distributor valve whereby water can be allowed to flow down a particular nozzle while the other nozzles have no water flow. In operation, high pressure water may be supplied to the water distributor valve, and a control mechanism may ensure that water is piped for a specified time to each of the nozzles in turn.

Preferably water can be used as cleaning fluid, especially high pressure water. Moreover, a chemical cleaning agent can be added to the cleaning fluid to increase the fluid's cleaning performance.

Furthermore, each nozzle may be flushed out in turn by means of compressed air. For example, the unused nozzles can be supplied with clean high pressure air to ensure that they remain unblocked by the ashy deposit. Flushing out each nozzle in turn by compressed air increases the efficiency of the turbine and the turbocharger compared with continuously flowing of compressed air through each nozzle.

The cleaning fluid flow can be controlled by a control means depending on the speed of the turbine and/or the temperature of the turbine and/or the elapsed time since the previous cleaning. The control means can especially be activated by a control system. For example, the cleaning may be started when the turbine speed has increased by more than 1.5% over a reference speed recorded at full engine load. Moreover, the control means can react to changes in the turbocharger speed at a given load. The control means can be related to engine temperatures in a similar way. It can be activated by an engine control system, related to turbocharger speed, engine temperature, or elapsed time since last clean.

The inventive turbine comprises a number of rotor blades, a number of stator blades and a number of nozzles. Each nozzle is connected to a cleaning fluid supply. This may be realised either by a common cleaning fluid supply for all nozzles or a number of cleaning fluid supplies where each supply supplies one single nozzle or a subdivision of nozzles of the number of nozzles. The turbine further comprises at least one distribution unit which is designed such that the cleaning fluid can be distributed to only a fraction of the nozzle at any one time.

The turbine may comprise at least one distributor valve which is placed between the nozzles and the cleaning fluid supply such that the cleaning fluid can be distributed to only a fraction of the nozzle at any one time. Preferably the nozzles are placed in the casing close to the turbine blades in upstream direction. Each nozzle can be designed to form a spray which impacts a small number of turbine blades under high engine load conditions. The nozzles should be placed in a close distance to the blades so that the droplets do not evaporate under high load conditions, and there is a larger number of nozzles since the spray fan is narrower than in standard designs, yet in total each of the turbine blades must be impacted by water droplets.

Preferably each of the nozzles is connected to a separate distributor valve. The distributor valve can be driven by compressed air.

The ratio between the number of nozzles and the number of rotor blades and/or the ratio between the number of nozzles and the number of stator blades may be between 1:1 and 1:6. Advantageously the ratio between the number of the nozzles and the number of rotor blades and/or the ratio between the number of nozzles and the number of stator blades is between 1:2 and 1:4. Preferably the ratio between the number of the nozzles and the number of rotor blades and/or the ratio between the number of nozzles and the number of stator blades is 1:2. For example, the turbine may comprise a turbine row with 24 turbine blades. In this case the turbine may, for instance, comprise between 8 and, advantageously, 12 nozzles.

The cleaning fluid may be water, preferably high pressure water. Advantageously the cleaning fluid can comprise a chemical cleaning agent to aid the cleaning of the turbine blades. The nozzles can be connected to a compressed air supply. The compressed air can be used in the same way as the water while the washing system is not used. For example the compressed air may flush out each nozzle in turn rather than continuously flowing through each nozzle. This increases the turbocharger efficiency.

The distribution unit may be connected to a control means for controlling it depending on the speed of the turbine and/or the temperature of the turbine and/or the elapsed time since the previous cleaning. The turbine can further comprise a control means which ensures that the cleaning fluid is led for a specified time to each of the nozzles in turn so as to perform a repeating cleaning cycle. The control means can be connected to a control system for activating the control means.

The turbine may comprise a number of stator blades and a number of rotor blades. The ashy deposit, which is wanted to clean away, is mainly found on the stator blades. The flow passages between some of the stator blades may become entirely blocked. The rotor blades also can become fouled by the same deposit, although the degree of fouling is usually much less. The present invention can preferably be used to clean the stator blades.

The inventive turbocharger comprises an inventive turbine as previously described. The turbocharger may comprise an axial turbine or a radial turbine. The turbocharger turbine can especially comprise at least one row of stationary blades and at least one row of rotating blades.

The invention allows the turbine and the turbocharger turbine, especially the stator blades of the turbine, to be washed at full load and the cleaning process has little or no effect on the engine operation. This is achieved by using a distribution unit which makes sure that only a fraction of the nozzles or only one nozzle is used at any one time. The consequence is that a low flow rate of cleaning fluid, for instance water, is used despite the increase in the number of washing nozzles. Furthermore, the turbine blades are cleaned effectively and this can be done at full engine load conditions. The increased cost of the water washing system, i.e. extra nozzles, extra piping, distributor valve, and control system, is economically viable since the engine operator can sell more power and the engine and the turbocharger are more reliable.

Further features, properties, and advantages of the present invention will become clear from the following description of an embodiment in conjunction with the accompanying drawings.
- Fig. 1: schematically shows a turbocharger in a sectional view.
- Fig. 2: schematically shows part of an inventive turbine in a sectional view.
- Fig. 3: schematically shows a possibility as to how to con- nect the nozzles to a water supply and to a com- pressed air supply.

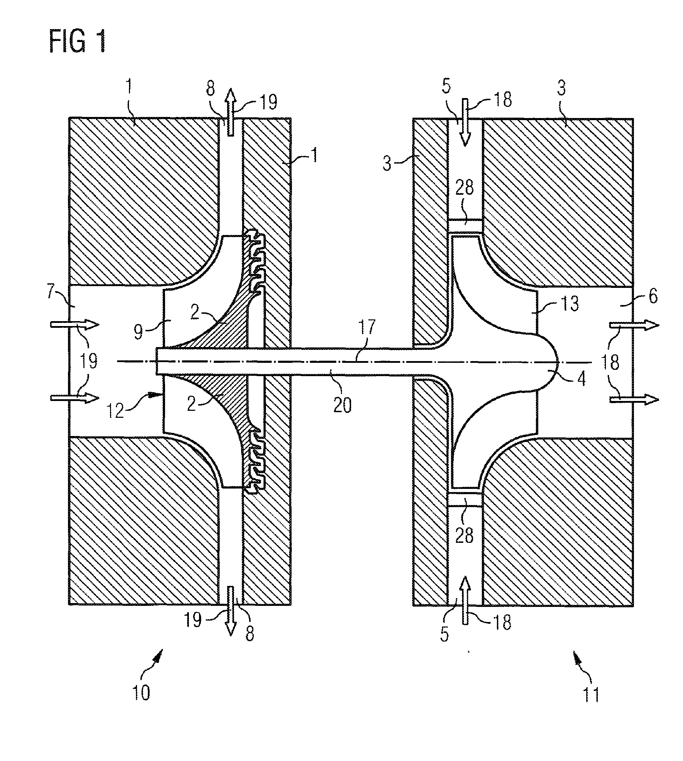

An embodiment of the present invention will now be described with reference to figures 1 to 3.

Figure 1 schematically shows a turbocharger in a sectional view. The turbocharger comprises a turbine 11 and a compressor 10. The turbine 11 and the compressor 10 are connected by a shaft 20.

The turbine 11 includes a rotor 4 which is located inside a turbine casing 3. The turbine casing 3 has an exhaust inlet 5 which leads to the rotor 4 so that the exhaust entering the exhaust inlet 5 activates the rotor 4. Further the turbine casing 3 has an exhaust outlet 6 through which the exhaust coming from the rotor 4 leaves the turbine casing 3. The arrows 18 indicate the exhaust stream entering the turbine casing 3 through the exhaust inlet 5, activating the rotor 4 and leaving the turbine casing 3 through the exhaust outlet 6.

The compressor 10 includes an impeller 12 which is located inside a compressor casing 1. Moreover, the compressor 10 has an air inlet 7 which air leads to the impeller 12 and an air outlet 8 through which the air coming from the impeller 12 leaves the compressor casing 1. The arrows 19 indicate the air stream entering the compressor casing 1 through the air inlet 7, being compressed by the impeller 12 and leaving the compressor casing 1 through the air outlet 8.

The impeller 12 comprises a hub 2 and vanes 9. The hub 2 is connected to the shaft 20. Further, the hub 2 is generally conical in shape and a plurality of circumferentially spaced arcuate vanes 9 are formed about its periphery.

The rotor 4 of the turbine 11, which comprises a number of turbine rotor blades 13 and a number of turbine stator blades 28, is connected to the shaft 20 so that the activated rotor 4 activates the shaft 20. The shaft 20 is further connected to the impeller 12 inside the compressor 10. Hence, the rotor 4 activates the impeller 12 by means of the shaft 20. The rotation axis of the rotor 4 is indicated by reference numeral 17.

In operation of the turbine 11 the exhaust stream 18 entering the exhaust inlet 5 activates the rotor 4 and leaves the turbine through the exhaust outlet 6. The arrows 18 indicate the direction of the exhaust stream. Meanwhile, the impeller 12 in the compressor 10 driven by the rotor 4 sucks atmospherically fresh air into the air inlet 7 and compresses it to precompressed fresh air, which enters the air outlet 8. The compressed air is then used for example in a reciprocating engine like e.g. a diesel engine. The arrows 19 indicate the air stream direction.

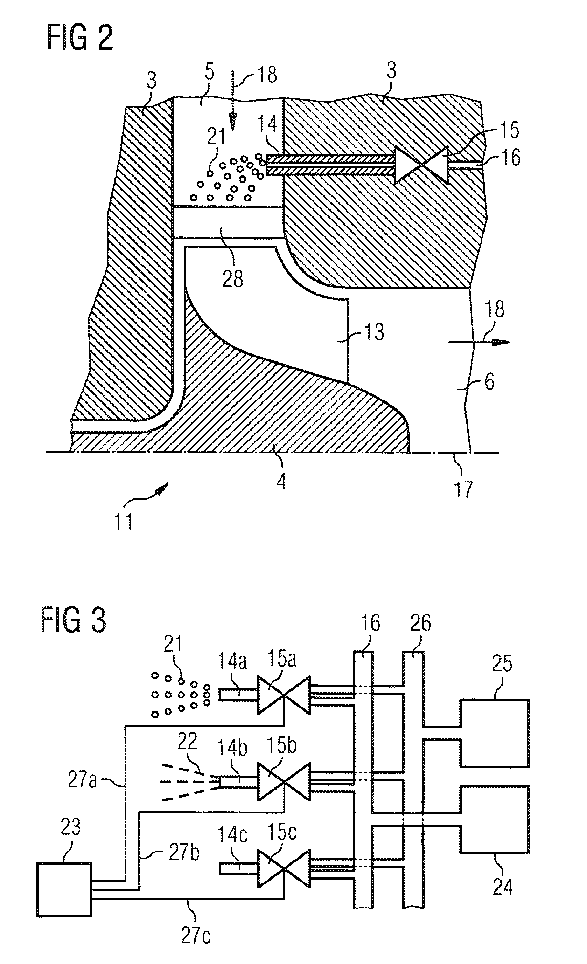

Figure 2 schematically shows part of an inventive turbine 11 in a sectional view. In Figure 1 and 2 a radial turbine is shown, because the exhaust stream 18 enters the turbine in radial direction with respect to the rotation axis 17. Instead of a radial turbine also an axial turbine can be used, where the exhaust stream enters the turbine in axial direction with respect to the rotation axis. Regarding the construction of an axial turbine it is referred to US 5,944,483, where an example for an axial turbine is described.

The inventive turbine 11, which is shown in Figure 2, comprises a number of nozzles 14 which are located inside the turbine casing 3 and which protrude into the exhaust inlet 5. Instead of protruding into the exhaust inlet 5 the nozzles 14 can flush with the inner surface of the exhaust inlet 5. The nozzles 14 are located close to the turbine stator blades 28 in upstream direction. Each nozzle 14 is connected to a flow channel 16 via a distribution unit, which is a distributor valve 15 in the present embodiment. However, each of the nozzles 14 can be also connected to a respective separate distributor valve 15. Alternatively, two or more nozzles 14 can be connected to the same distributor valve 15. The use of only one nozzle 14 or only a fraction of the nozzles 14 at any one time makes it possible to clean the turbine blades 13, 28 under high load conditions. The distributor valve(s) 15 can, for example, be driven by compressed air.

A cleaning fluid is led through the flow channel 16 to the nozzles 14 where it is sprayed into the exhaust inlet. The cleaning fluid can be sprayed into the exhaust inlet 5 in the direction of the exhaust stream 18 or perpendicular to the direction of the exhaust stream 18. The cleaning fluid, which is sprayed into the exhaust inlet 5, impinges mainly on the turbine stator blades 28 but also on the turbine rotor blades 13 and cleans the blades 13, 28, in particular the stator blades 28.

The cleaning fluid can, for example, be water 21, as in the present embodiment, or any other suitable cleaning liquid. Especially high pressure water can be used as cleaning fluid. Moreover, a chemical cleaning agent can be added to the cleaning fluid to aid cleaning the turbine blades 13.

Generally, the ratio between the number of nozzles 14 and the number of rotor blades 13 and/or the ratio between the number of nozzles 14 and the number of stator blades 28 may be between 1:1 and 1:6, preferably 1:2. In the present embodiment, the turbine 11 comprises a turbine row with 24 turbine stator blades 28 and 12 nozzles 14.

Figure 3 schematically shows an example for a connection between a number of nozzles 14 to a water supply 24 and to a compressed air supply 25. Figure 3 exemplary shows three nozzles 14a, 14b, 14c. Each nozzle 14a, 14b, 14c is connected to a flow channel 26 which is connected to a compressed air supply 25. Moreover, each nozzle 14a, 14b, 14c is connected to a flow channel 16 which is connected to a water supply 24. Between each nozzle 14a, 14b, 14c and the respective flow channels 16, 26 a distributor valve 15a, 15b, 15c is located. The distributor valves 15a, 15b, 15c are each formed such that the nozzles 14a, 14b, 14c can be provided with compressed air or water. Each of the valves 14a, 14b, 14c is further connected to a control means 23 by leads 27a, 27b, 27c.

The distributor valves 15a, 15b, 15c can be controlled by the control means 23 depending on the speed of the turbine 11 and/or the temperature of the turbine 11 and/or the elapsed time since the previous cleaning. The control means 23 can, for instance, react to changes in the speed of the turbocharger at a given load. For example, if the turbocharger speed has increased by more than 1.5% over a reference level recorded at full engine load, the washing cycle can begin. Alternatively or additionally the control means 23 can be related to the engine temperatures in a similar way. Moreover, the control means 23 can be activated by an engine control system, related to turbocharger speed, engine temperature, or elapsed time since last clean.

The washing cycle or cleaning cycle can be performed such that only a first nozzle 14a sprays water into the exhaust inlet 5 for a specified time. Then the valve 15a of the first nozzle 14a is closed and only a second nozzle 14b sprays water into the exhaust inlet for a specified time. Then the valve 15b of the second nozzle 14b is closed and only a third nozzle 14c sprays water into the exhaust inlet 5 for a specified time, and so forth. It is also possible that two or more nozzles 14 spray water into the exhaust inlet 5 at the same time. In the case that two nozzles 14 are in operation at the same time it is advantageous if these nozzles 14 are located opposite to each other related to the rotation axis 17.

The nozzles 14a, 14b, 14c in figure 3 are further connected to a compressed air supply 25. This allows for flushing out each nozzle 14a, 14b, 14c in turn by means of compressed air. In figure 3 the nozzle 14a sprays water 21 into the exhaust inlet 5, the nozzle 14b is flushed out by air 22, and the nozzle 14c is not in operation. This means that the valve 15c is completely closed, while the valve 15b is closed in regard to the flow channel 16 which is connected to the water supply 24 and open in regard to the flow channel 26 which is connected to compressed air supply 25. At the same time the valve 15a is closed in regard to the flow channel 26 which is connected to the compressed air supply 25 and open in regard the flow channel 16 which is connected to the water supply 24.

The distributor valves 15 are used so that only one nozzle 14 or only a fraction of the nozzles 14 is in use at any one time. Thus, a low flow rate of water is used despite the increase in the number of nozzles 14 compared to the state of the art. Moreover, all turbine blades 13, 28 can effectively be cleaned at full engine load conditions.

## Claims

1. A method for cleaning a number of turbine blades (13, 28) of a turbine (11) under operation conditions by means of a cleaning fluid (21) which is sprayed onto the turbine blades (13, 28) by a number of nozzles (14), **characterised in that** the cleaning fluid (21) is distributed to the nozzles (14) such that only a fraction of the nozzles (14) is used at any one time to spray the cleaning fluid (21) onto the turbine blades (13, 28).

2. The method as claimed in claim 1, **characterised in that** the cleaning fluid (21) is distributed to the nozzles (14) such that only one nozzle (14) is used at any one time.

3. The method as claimed in claim 1 or 2, **characterised in that** the cleaning fluid (21) is distributed by means of a distributor valve (15), preferably the distributor valve being driven by compressed air.

4. The method as claimed in any of the claims 1 to 3, **characterised in that** the cleaning fluid (21) is led for a specified time to each of the nozzles (14) in turn.

5. The method as claimed in any of the claims 1 to 4, **characterised in that** water (21) is used as cleaning fluid, preferably high pressure water (21) being used as cleaning fluid.

6. The method as claimed in any of the claims 1 to 5, **characterised in that** a chemical cleaning agent is added to the cleaning fluid (21).

7. The method as claimed in any of the claims 1 to 6, **characterised in that** each nozzle (14) is flushed out in turn by means of compressed air.

8. The method as claimed in any of the claims 1 to 7, **characterised in that** the cleaning fluid flow is controlled by a control means depending on the speed of the turbine and/or the temperature of the turbine and/or the elapsed time since the previous cleaning, preferably the control means being activated by a control system.

9. The method as claimed in any of the claims 1 to 8, **characterised in that** the cleaning is started when the turbine speed has increased by more than 1.5% over a reference speed recorded at full engine load.

10. A turbine (11) comprising a number of rotor blades (13), a number of stator blades (28) and a number of nozzles (14), each nozzle (14) being connected to a cleaning fluid supply (24), **characterised in that** it further comprises at least one distribution unit which is designed such that the cleaning fluid can be distributed to only a fraction of the nozzles (14) at any one time.

11. The turbine (11) as claimed in claim 10, **characterised in that** it further comprises at least one distributor valve (15) which is placed between the nozzles (14) and the cleaning fluid supply (24) such that the cleaning fluid (21) can be distributed to only a fraction of the nozzles (14) at any one time, preferably the distributor valve (15) being driven by compressed air.

12. The turbine (11) as claimed in claim 11, **characterised in that** each of the nozzles (14) is connected to a separate distributor valve (15).

13. The turbine (11) as claimed in any of the claims 10 to 12, **characterised in that** the nozzles (14) are placed close to the turbine blades (13, 28) in upstream direction.

14. The turbine (11) as claimed in any of the claims 10 to 13, **characterised in that** the ratio between the number of nozzles (14) and the number of rotor blades (13) and/or the ratio between the number of nozzles (14) and the number of stator blades (28) is between 1:1 and 1:6, preferably is between 1:2 and 1:4, and more preferably is 1:2.

15. The turbine (11) as claimed in any of the claims 10 to 14, **characterised in that** the cleaning fluid is water (21), preferably the water (21) being high pressure water.

16. The turbine (11) as claimed in any of the claims 10 to 15, **characterised in that** the cleaning fluid (21) comprises a chemical cleaning agent.

17. The turbine (11) as claimed in any of the claims 10 to 16, **characterised in that** the nozzles (14) are connected to a compressed air supply (25).

18. The turbine (11) as claimed in any of the claims 10 to 17, **characterised in that** the distribution unit is connected to a control means for controlling it depending on the speed of the turbine and/or the temperature of the turbine and/or the elapsed time since the previous cleaning.

19. The turbine (11) as claimed in any of the claims 10 to 18, **characterised in that** it comprises a control means which ensures that the cleaning fluid (21) is led for a specified time to each of the nozzles (14) in turn.

20. The turbine (11) as claimed in claim 18 or 19, **characterised in that** the control means is connected to a control system for activating the control means.

21. A turbocharger comprising a turbine (11) as claimed in any of the claims 10 to 20.

## Patentansprüche

1. Verfahren zur Reinigung mehrerer Turbinenschaufeln (13, 28) einer Turbine (11) unter Betriebsbedingungen durch ein Reinigungsfluid (21), das mehrere Düsen (14) auf die Turbinenschaufeln (13, 28) gesprüht wird, **dadurch gekennzeichnet, dass** das Reinigungsfluid (21) so auf die Düsen (14) verteilt wird, dass zu jedem Zeitpunkt nur ein Teil der Düsen (14) verwendet wird, um das Reinigungsfluid (21) auf die Turbinenschaufeln (13, 28) zu sprühen.

2. Verfahren nach Anspruch 1, **dadurch gekennzeichnet, dass** das Reinigungsfluid (21) so auf die Düsen (14) verteilt wird, dass zu jedem Zeitpunkt nur eine Düse (14) verwendet wird.

3. Verfahren nach Anspruch 1 oder 2, **dadurch gekennzeichnet, dass** das Reinigungsfluid (21) durch ein Verteilerventil (15) verteilt wird, wobei das Verteilerventil vorzugsweise durch Druckluft betrieben wird.

4. Verfahren nach einem der Ansprüche 1 bis 3, **dadurch gekennzeichnet, dass** das Reinigungsfluid (21) für eine bestimmte Zeit der Reihe nach zu jeder der Düsen (21) geleitet wird.

5. Verfahren nach einem der Ansprüche 1 bis 4, **dadurch gekennzeichnet, dass** Wasser (21) als Reinigungsfluid verwendet wird, wobei vorzugsweise Hochdruckwasser (21) als Reinigungsfluid verwendet wird.

6. Verfahren nach einem der Ansprüche 1 bis 5, **dadurch gekennzeichnet, dass** ein chemisches Reinigungsmittel zu dem Reinigungsfluid (21) zugesetzt wird.

7. Verfahren nach einem der Ansprüche 1 bis 6, **dadurch gekennzeichnet, dass** jede Düse (14) der Reihe nach mit Druckluft ausgespült wird.

8. Verfahren nach einem der Ansprüche 1 bis 7, **dadurch gekennzeichnet, dass** der Strom des Reinigungsmittels durch ein Steuermittel in Abhängigkeit von der Geschwindigkeit der Turbine und/oder der Temperatur der Turbine und/oder der seit der letzten Reinigung vergangenen Zeit steuerbar ist, wobei das Steuermittel vorzugsweise durch ein Steuersystem aktiviert wird.

9. Verfahren nach einem der Ansprüche 1 bis 8, **dadurch gekennzeichnet, dass** die Reinigung beginnt, wenn die Turbinengeschwindigkeit um mehr als 1,5 % über eine Referenzgeschwindigkeit angestiegen ist, die bei voller Motorbelastung aufgezeichnet wurde.

10. Turbine (11), die mehrere Rotorblätter (13), mehrere Statorblätter (28) und mehrere Düsen (14) umfasst, wobei jede Düse (14) mit einer Reinigungsfluidversorgung (24) verbunden ist, **dadurch gekennzeichnet, dass** sie ferner zumindest eine Verteilungseinheit umfasst, die so gestaltet ist, dass das Reinigungsfluid zu jedem Zeitpunkt nur auf einen Teil der Düsen (14) verteilt werden kann.

11. Turbine (11) nach Anspruch 10, **dadurch gekennzeichnet, dass** sie ferner zumindest ein Verteilerventil (15) umfasst, das zwischen den Düsen (14) und der Reinigungsfluidversorgung (24) angeordnet ist, sodass das Reinigungsfluid (21) zu jedem Zeitpunkt nur auf einen Teil der Düsen (14) verteilt werden kann, wobei das Verteilerventil (15) durch Druckluft betrieben wird.

12. Turbine (11) nach Anspruch 11, **dadurch gekennzeichnet, dass** jede der Düsen (14) mit einem eigenen Verteilerventil (15) verbunden ist.

13. Turbine (11) nach einem der Ansprüche 10 bis 12, **dadurch gekennzeichnet, dass** die Düsen (14) in stromauf gelegener Richtung nahe der Turbinenschaufeln (13, 28) angeordnet sind.

14. Turbine(11) nach einem der Ansprüche 10 bis 13, **dadurch gekennzeichnet, dass** das Verhältnis von der Anzahl der Düsen (14) zu der Anzahl der Rotorblätter (13) und/oder das Verhältnis von der Anzahl der Düsen (14) zu der Anzahl der Statorblätter (28) zwischen 1:1 und 1:6 liegt, vorzugsweise zwischen 1:2 und 1:4, und noch bevorzugter 1:2 beträgt.

15. Turbine (11) nach einem der Ansprüche 10 bis 14, **dadurch gekennzeichnet, dass** das Reinigungsfluid Wasser (21) ist, vorzugsweise Wasser (21), bei dem es sich um Hochdruckwasser handelt.

16. Turbine (11) nach einem der Ansprüche 10 bis 15, **dadurch gekennzeichnet, dass** das Reinigungsfluid (21) ein chemisches Reinigungsmittel umfasst.

17. Turbine (11) nach einem der Ansprüche 10 bis 16, **dadurch gekennzeichnet, dass** die Düsen (14) mit einer Druckluftversorgung (25) verbunden sind.

18. Turbine (11) nach einem der Ansprüche 10 bis 17, **dadurch gekennzeichnet, dass** die Verteilungseinheit mit einem Steuermittel verbunden ist, das dazu dient, diese in Abhängigkeit von der Geschwindigkeit der Turbine und/oder der Temperatur der Turbine und/oder der seit der letzten Reinigung vergangenen Zeit zu steuern.

19. Turbine (11) nach einem der Ansprüche 10 bis 18, **dadurch gekennzeichnet, dass** sie ein Steuermittel umfasst, das sicher stellt, dass das Reinigungsfluid (21) für eine bestimmte Zeit der Reihe nach zu jeder der Düsen (14) geleitet wird.

20. Turbine (11) nach Anspruch 18 oder 19, **dadurch gekennzeichnet, dass** das Steuermittel mit einem Steuersystem zur Aktivierung des Steuermittels verbunden ist.

21. Turbolader, der eine Turbine (11) nach einem der Ansprüche 10 bis 20 umfasst.

## Revendications

1. Procédé de nettoyage d'un nombre d'aubes de turbine (13, 28) d'une turbine (11) sous des conditions de fonctionnement au moyen d'un fluide de nettoyage (21) qui est pulvérisé sur les aubes de turbine (13, 28) par un nombre de buses (14), **caractérisé en ce que** le fluide de nettoyage (21) est distribué aux buses (14) de telle sorte que seulement une fraction des buses (14) est utilisée à la fois pour projeter le fluide de nettoyage (21) sur les aubes de turbine (13, 28).

2. Procédé selon la revendication 1, **caractérisé en ce que** le fluide de nettoyage (21) est distribué aux buses (14) de telle sorte que seulement une buse (14) est utilisée à la fois.

3. Procédé selon la revendication 1 ou 2, **caractérisé en ce que** le fluide de nettoyage (21) est distribué au moyen d'une vanne de distribution (15), de préférence la vanne de distribution étant entraînée par de l'air comprimé.

4. Procédé selon l'une quelconque des revendications 1 à 3, **caractérisé en ce que** le fluide de nettoyage (21) est mené pendant un temps spécifié à chacune des buses (14) à son tour.

5. Procédé selon l'une quelconque des revendications 1 à 4, **caractérisé en ce que** de l'eau (21) est utilisée comme fluide de nettoyage, de préférence de l'eau sous haute pression (21) étant utilisée comme fluide de nettoyage.

6. Procédé selon l'une quelconque des revendications 1 à 5, **caractérisé en ce qu'**un agent de nettoyage chimique est ajouté au fluide de nettoyage (21).

7. Procédé selon l'une quelconque des revendications 1 à 6, **caractérisé en ce que** chaque buse (14) est rincée à son tour par de l'air comprimé.

8. Procédé selon l'une quelconque des revendications 1 à 7, **caractérisé en ce que** l'écoulement du fluide de nettoyage est commandé par un moyen de commande en fonction de la vitesse de la turbine et/ou de la température de la turbine et/ou du temps qui s'est écoulé depuis le nettoyage précédent, de préférence le moyen de commande étant activé par un système de commande.

9. Procédé selon l'une quelconque des revendications 1 à 8, **caractérisé en ce que** le nettoyage est commencé lorsque la vitesse de la turbine a augmenté selon plus que 1,5% par rapport à une vitesse de référence enregistrée à une charge complète du moteur.

10. Turbine (11) comprenant un nombre d'aubes de rotor (13), un nombre d'aubes de stator (28) et un nombre de buses (14), chaque buse (14) étant reliée à une alimentation en fluide de nettoyage (24), **caractérisée en ce qu'**elle comprend en outre au moins une unité de distribution qui est conçue de façon que le fluide de nettoyage peut être distribué seulement à une fraction des buses (14) à la fois.

11. Turbine (11) selon la revendication 10, **caractérisée en ce qu'**elle comprend en outre au moins une vanne de distribution (15) qui est placée entre les buses (14) et l'alimentation en fluide de nettoyage (24) de telle sorte que le fluide de nettoyage (21) peut être distribué à seulement une fraction des buses (14) à la fois, de préférence la vanne de distribution (15) étant entraînée par de l'air comprimé.

12. Turbine (11) selon la revendication 11, **caractérisée en ce que** chacune des buses (14) est reliée à une vanne de distribution séparée (15).

13. Turbine (11) selon l'une quelconque des revendications 10 à 12, **caractérisée en ce que** les buses (14) sont placées à proximité des aubes de turbine (13, 28) dans une direction en amont.

14. Turbine (11) selon l'une quelconque des revendications 10 à 13, **caractérisée en ce que** le rapport entre le nombre de buses (14) et le nombre d'aubes de rotor (13) et/ou le rapport entre le nombre de buses (14) et le nombre d'aubes de stator (28) est entre 1:1 et 1:6, de préférence est entre 1:2 et 1:4 et selon une plus grande préférence il est de 1:2.

15. Turbine (11) selon l'une quelconque des revendications 10 à 14, **caractérisée en ce que** le fluide de nettoyage est l'eau (21), de préférence l'eau (21) étant de l'eau sous haute pression.

16. Turbine (11) selon l'une quelconque des revendications 10 à 15, **caractérisée en ce que** le fluide de nettoyage (21) comprend un agent de nettoyage chimique.

17. Turbine (11) selon l'une quelconque des revendications 10 à 16, **caractérisée en ce que** les buses (14) sont reliées à une alimentation d'air comprimé (25).

18. Turbine (11) selon l'une quelconque des revendications 10 à 17, **caractérisée en ce que** l'unité de distribution est reliée à un moyen de commande pour la commander en fonction de la vitesse de la turbine et/ou de la température de la turbine et/ou du temps qui s'est écoulé depuis le nettoyage précédent.

19. Turbine (11) selon l'une quelconque des revendications 10 à 18, **caractérisée en ce qu'**elle comprend un moyen de commande qui assure que le fluide de nettoyage (21) soit mené pendant un temps spécifié à chacune des buses (14) à son tour.

20. Turbine (11) selon la revendication 18 ou 19, **caractérisée en ce que** le moyen de commande est relié à un système de commande pour activer le moyen de commande.

21. Turbochargeur comprenant une turbine (11) selon l'une quelconque des revendications 10 à 20.
